# EUROPEAN PATENT APPLICATION

(11) **EP 2 680 031 A1**
(43) Date of publication of application: **01.01.2014**
(21) Application number: 13174380.9
(22) Date of filing: 28.06.2013
(51) Int. Cl.: G01S 7/497, G01S 17/93

(54) **Laser radar adjustment apparatus and method of adjusting laser radar**

(30) Priority: 29.06.2012 JP 2012146409; 27.11.2012 JP 2012258959
(71) Applicant: Ricoh Company, Ltd., Tokyo 143-8555 (JP)
(72) Inventor: Nakajima, Mitsuru, Tokyo 143-8555 (JP); Suzuki, Shuichi, Tokyo 143-8555 (JP); Yoshimura, Kenichi, Tokyo 143-8555 (JP); Hayashi, Yuusuke, Tokyo 143-8555 (JP)
(74) Representative: Leeming, John Gerard

(57) **Abstract**

A laser radar adjustment apparatus for adjusting a laser radar apparatus that includes a light source to project light onto an object to be detected and a light receiving section to detect light that is projected by the light source and reflected by the object to be detected, includes a first light emitting unit emitting light and being provided within a detection target region that is to be detected by the light receiving section; a second light emitting unit emitting light and being outside the detection target region; and an emission controller controlling emissions of the first and second light emitting units by causing the first and second light emitting units to emit light, so that the light receiving section is adjusted.

## Description

Recently, there has been used an object-type detection apparatus based on a scan-type laser radar used in a vehicle to detect a vehicle running in front, an obstacle on the road in front, a lane marker such as a white line defining a vehicle lane or a cat's eye on the road and the like.

A laser radar apparatus on a vehicle emits laser light forward and receives reflection light that is the laser light reflected by, for example, the vehicle running in front and the obstacle on the road in front. By doing this, the vehicle may detect another vehicle or an obstacle in front of the vehicle.

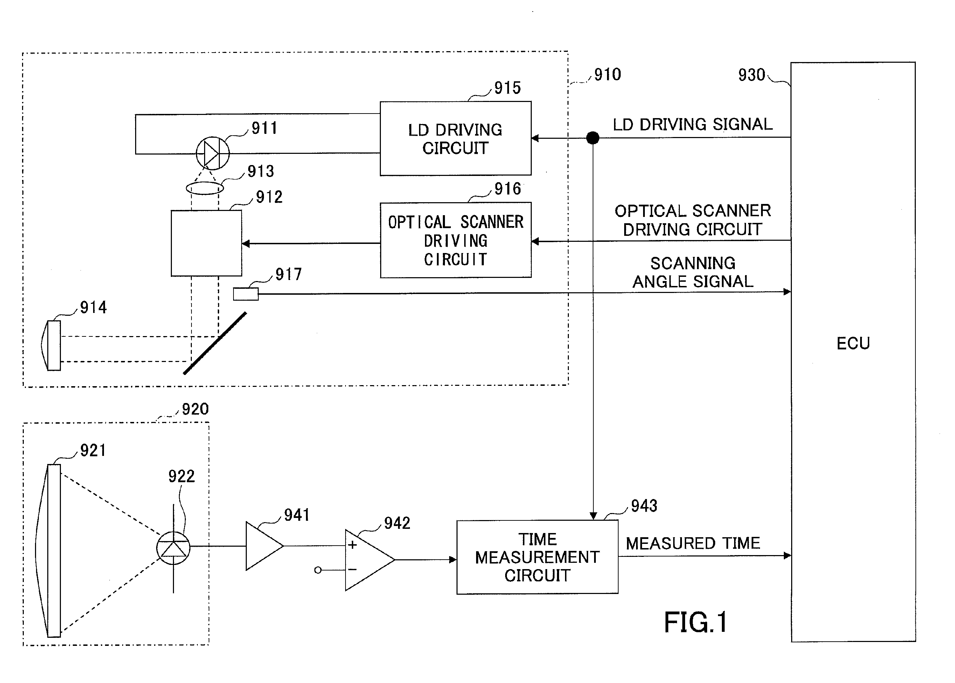

An operation of a general scan-type laser radar apparatus is described with reference to FIG. 1. As shown in FIG. 1, the scan-type laser radar apparatus includes a light emitting section 910, a light receiving section 920, an Electronic Control Unit (ECU) 930, which serves as a control section, and the like.

Further, the light emitting section 910 and the light receiving section 920 are mounted on the front side of the vehicle to detect an object existing on the front side of the vehicle including a car.

The light emitting section 910 includes a laser diode (LD) 911, which emits pulsed laser light, an optical scanner 912, an input optical system 913, which guides the light from the LD 911 to the optical scanner 912, an output optical system 914, which performs control of an angle of the light relative to a road surface and the like on the light beam having passed through the optical scanner 912.

The LD 911 is connected to the ECU 930 via an LD driving circuit 915, so as to emit the laser light base on a driving signal from the ECU 930. The optical scanner 912 is connected to the ECU 930 via an optical scanner driving circuit 916, so as to repeatedly scan the light beam, which is emitted from the LD 911, in the horizontal direction based on a predetermined fixed frequency.

The scanning angle of the light beam by the optical scanner 912 is detected by a scanning angle monitor 917 to be output to the ECU 930 to be used as feedback data to determine an optical scanner driving signal applied to the optical scanner driving circuit 916.

The light receiving section 920 includes a light receiving lens 921, a light receiving device 922 and the like, so that the laser light reflected by an object in front of the vehicle ("reflected light") passes through the light receiving lens 921, a mirror (not shown) and the like and is incident into the light receiving device 922.

The light receiving device 922 includes a photodiode and the like and outputs an electronic signal having a voltage value corresponding to the light intensity of the reflected light. The electronic signal from the light receiving device 922 is amplified by an amplifier 941 and is output to a comparator 942.

The comparator 942 compares the output voltage from the amplifier 941 with a reference voltage "V0". When determining that the output voltage is greater than the reference voltage "V0", the comparator 942 outputs a predetermined light receiving signal to a time measurement circuit 943.

In addition to the light receiving signal, the time measurement circuit 943 further inputs an LD driving signal which is output from the ECU 930 to the LD driving circuit 915. The time measurement circuit 943 measures a time period from when the LD driving signal is output to when the predetermined light receiving signal is generated, namely, a time difference between the time when the laser light is emitted and the time when the reflected light is received. The time measurement circuit 943 outputs the time difference as measured time data to the ECU 930. Based on the measured time data, the ECU 930 may easily calculate a distance to the object.

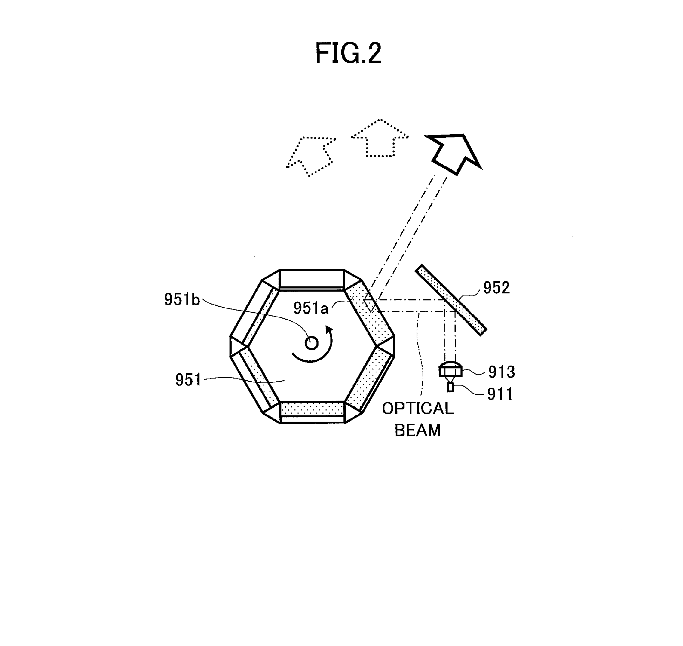

In a scan-type laser radar apparatus having a configuration described above, as the optical scanner 912 used in the light emitting section 910, a polygon mirror, a Galvano mirror or the like may be used. For example, FIG. 2 shows an example where the LD 911 and the input optical system 913 (e.g., a collimator lens) are disposed near a scanning mirror 951 (e.g., a polygon mirror).

In this optical scanner 912, the laser light emitted from the LD 911 is passed through the input optical system 913 and is reflected by a mirror 952, so that the laser light is irradiated on a mirror surface 951a of the scanning mirror 951.

The scanning mirror 951 rotates about a rotation axis 951b and the laser light irradiated on the mirror surface 951a is reflected. Therefore, it becomes possible to emit and scan the laser light in a wide range in the horizontal direction. By doing this, it becomes possible to measure the distance to an object in a wide range.

Japanese Patent Laid-Open Publication No. 2002-236177 discloses an adjusting method when such a scan-type laser radar apparatus is mounted in a vehicle such as a car. Specifically, in the adjusting method, light from a light source (e.g., a semiconductor laser), which is included in the scan-type laser radar apparatus, is irradiated (projected) to an object (i.e., an object to be detected). Then, the reflected light from the object is measured by the light receiving device in the scan-type laser radar apparatus, and adjustment is performed.

According to an aspect of the present invention, a laser radar adjustment apparatus is disclosed for adjusting a laser radar apparatus that includes a light source to project light onto an object to be detected and a light receiving section to detect light that is projected by the light source and reflected by the object to be detected.

The laser radar adjustment apparatus includes a first light emitting unit emitting light and being provided within a detection target region that is to be detected by the light receiving section; a second light emitting unit emitting light and being provided outside the detection target region; and an emission controller controlling emissions of the first and second light emitting units by causing the first and second light emitting units to emit light, so that the light receiving section is adjusted.

Other objects, features, and advantages of the present invention will become more apparent from the following description when read in conjunction with the accompanying drawings, in which:
FIG. 1 illustrates a functional diagram of a scan-type laser radar apparatus;
FIG. 2 illustrates an optical scanner of FIG. 1;
FIG. 3 illustrates a case where light amount distribution of projected light from a light source is biased;
FIG. 4 illustrates another case where the light amount distribution of the projected light from the light source is biased;
FIG. 5 illustrates a configuration of the laser radar apparatus to be adjusted;
FIG. 6 illustrates an operation of the laser radar apparatus to be adjusted;
FIG. 7 is a first drawing illustrating a laser radar adjustment apparatus according to a first embodiment;
FIG. 8 is a second drawing illustrating the laser radar adjustment apparatus according to the first embodiment;
FIG. 9 is a third drawing illustrating the laser radar adjustment apparatus according to the first embodiment;
FIG. 10 is a fourth drawing illustrating the laser radar adjustment apparatus according to the first embodiment;
FIG. 11 is a fifth drawing illustrating the laser radar adjustment apparatus according to the first embodiment;
FIG. 12 is a sixth drawing illustrating the laser radar adjustment apparatus according to the first embodiment;
FIG. 13 is a first drawing illustrating a method of adjusting a laser radar adjustment apparatus according to the first embodiment;
FIG. 14 is a second drawing illustrating the method of adjusting the laser radar adjustment apparatus according to the first embodiment;
FIG. 15 is a third drawing illustrating the method of adjusting the laser radar adjustment apparatus according to the first embodiment;
FIG. 16 is a fourth drawing illustrating the method of adjusting the laser radar adjustment apparatus according to the first embodiment;
FIG. 17 is a fifth drawing illustrating the method of adjusting the laser radar adjustment apparatus according to the first embodiment;
FIG. 18 is a sixth drawing illustrating the method of adjusting the laser radar adjustment apparatus according to the first embodiment;
FIG. 19 is a seventh drawing illustrating the method of adjusting the laser radar adjustment apparatus according to the first embodiment;
FIG. 20 is an eighth drawing illustrating the method of adjusting the laser radar adjustment apparatus according to the first embodiment;
FIG. 21 is a ninth drawing illustrating the method of adjusting the laser radar adjustment apparatus according to the first embodiment;
FIG. 22 is a first drawing illustrating a laser radar adjustment apparatus according to a second embodiment; and
FIG. 23 is a second drawing illustrating the laser radar adjustment apparatus according to the second embodiment.

In the adjustment method disclosed in Japanese Patent Laid-Open Publication No. 2002-236177, it should be noted that it is assumed that the light projection axis from the light source is coincident with the light receiving axis in the scan-type laser radar apparatus. However, there is no description on how to adjust the light projection axis and the light receiving axis so that these axes are coincident with each other.

If the light projection axis and the light receiving axis are not coincident with each other, it may become difficult to receive the reflected light from the object to be detected. Further, even if the reflected light is received, it may still be difficult to acquire (receive) a sufficient light amount to perform desired distance measurement.

On the other hand, in such a scan-type laser radar apparatus, it may be possible to adjust the position of the light receiving device in a manner that the light receiving device is disposed at the position where the light intensity of the reflected light, which is irradiated to the object and reflected by the object, is maximized. By doing this, it may become possible to receive a certain light amount and measure the distance to some extent.

Recently, however, it has been desired that an object far from the vehicle may also be detected because the vehicle may travel very fast. Also, it has been desired to detect a small moving object like a child. To that end, for example, cases are considered where a second vehicle, which is separated from a first vehicle or the like by 200 m, is to be detected and a person, who is separated from the first vehicle or the like by 50 m, is to be detected.

In the case where the second vehicle is separated from the first vehicle or the like by 200 m, when it is assumed that the width of the second vehicle is 2 m, it is desired to detect an angle (width) of approximately 0.57 degrees. In the case where a person separated from the first vehicle or the like by 50 m, when it is assumed that the width of the person is 0.5 m, it is desired to detect an angle (width) of approximately 0.57 degrees.

Further, to determine what is the detected object, it may be desired that the angle (width) may be divided into five through ten sections. To that end, it is desired that the scan-type laser radar apparatus has approximately 0.1 degree angle (width) resolution.

The 0.1 degree angle (width) resolution corresponds to a size of approximately 0.17 mm on the light receiving surface when a lens (f=100 mm) is used. Therefore, if there is a misalignment or the like of such a scale (i.e., approximately 0.17 mm), it may become difficult to accurately detect an object.

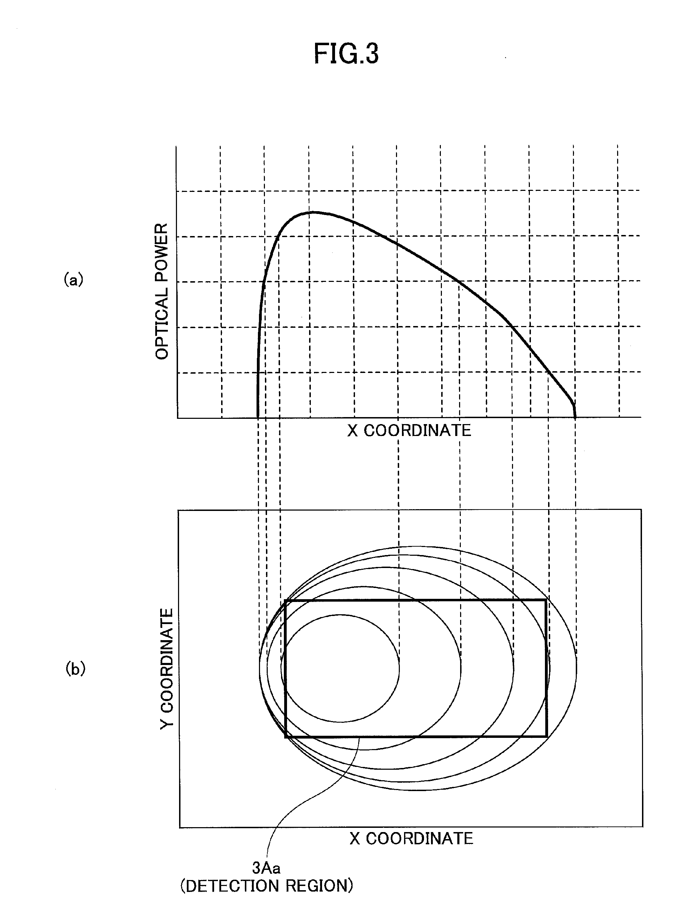

Further, as shown in part (a) of FIG. 3, a case is considered where the distribution of the projected light amount (light power) in the X coordinate is biased. In this case, it is further assumed that the position of the light receiving section corresponds to the position where the maximum light intensity is detected as the result of detection of the reflected light by the light receiving section.

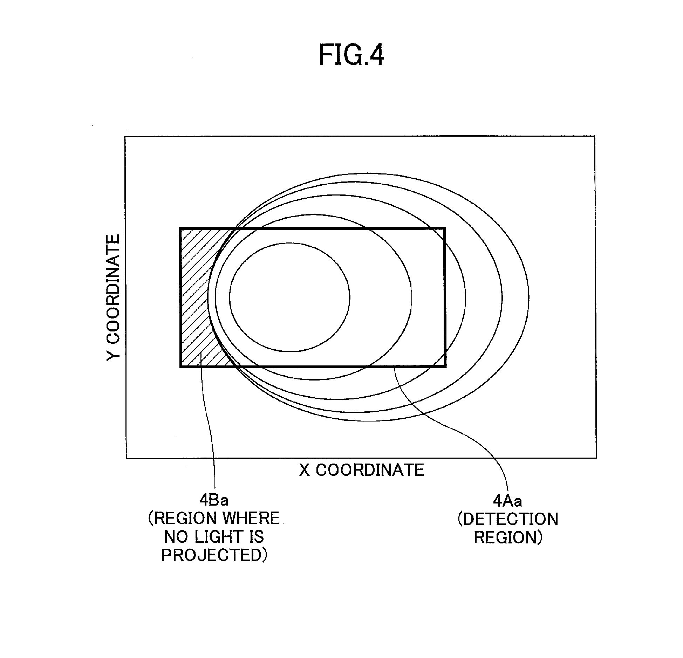

In this case, as shown in FIG. 4, the measurement region may be shifted due to the peak position of the light amount distribution, and as a result, the detection region 4Aa may also be shifted in the lateral direction. On the other hand, a part (b) of FIG. 3 shows a desired case where the detection region 3Aa is appropriately set within a region where the light is projected. However, if the light amount distribution of the projected light is biased as shown in part (a) of FIG. 3, there is a generated region 4Ba where no light is projected within the detection region 4Aa.

When such a region 4Ba where no light is projected within the detection region 4Aa, it is not possible to detect the object to be detected in the region 4Ba where no light is projected. It is desired to avoid this case. Here, the part (a) of FIG. 3 shows a relationship between the position of the projected light in the X coordinate and the light power (amount). The part (b) of FIG. 3 shows a beam profile of the projected light and the like.

As described above, it is desired for the scan-type laser radar apparatus to be mounted in a vehicle to highly-accurately adjust so that the light projection axis and the light receiving axis are coincident with each other to meet the demands for accurately detecting a target object far from the vehicle. Namely, in the viewpoint of the light projection, it is desired to project the light at the desired region, and in the viewpoint of the light reception, it is desired to ensure to receive the light within the light receiving range.

Further, as disclosed in Japanese Patent Laid-Open Publication No. H11-38123, it may be possible to adjust the light projection axis by detecting the light emitting point where light is directly projected and detecting the light projected on the object to be detected using a camera. However, a method of highly-accurately adjusting the light receiving axis is not disclosed.

Therefore, it is desired to provide a laser radar adjustment device and a method of adjusting the laser radar for the scan-type laser radar apparatus to be mounted in a vehicle or the like.

Embodiments to carry out the present invention are described. The same reference numerals are used to describe the same elements, and the repeated descriptions thereof may be omitted.

### First embodiment

A method of adjusting the laser radar and a laser radar adjustment apparatus according to a first embodiment are described.

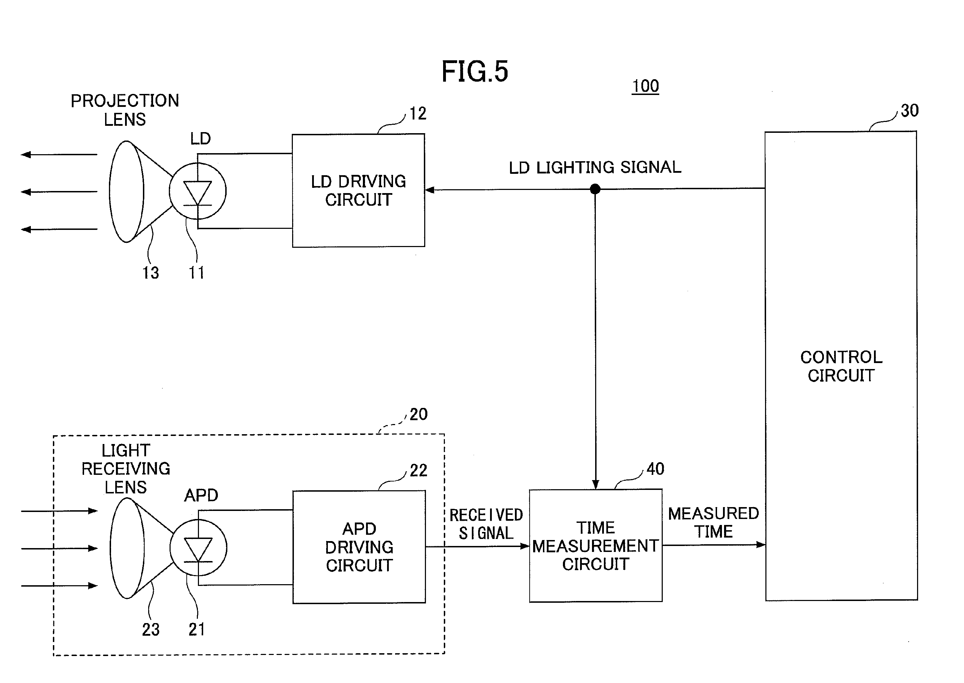

First, with reference to FIG. 5, a laser radar apparatus to be adjusted according to this embodiment is described. As shown in FIG. 5, the laser radar apparatus 100 includes a laser diode (LD) 11, which serves as a light source, an LD driving circuit 12, a projection lens 13 to project the light from the LD 11, an avalanche photodiode (APD) 21, which serves as a light receiving device, an APD driving circuit 22, a light receiving lens 23, which collects the light received by the APD 21, a control circuit 30, and a time measurement circuit 40.

Here, the electrical connection between the LD driving circuit 12 and the control circuit 30 is connected to the time measurement circuit 40. The APD driving circuit 22 is electrically connected (hereinafter simplified as "connected") to the time measurement circuit 40. The time measurement circuit 40 is connected to the control circuit 30.

In the laser radar apparatus 100, the control circuit 30 outputs an LD lighting signal to the LD driving circuit 12. The LD driving circuit 12 drives the LD 11 based on the LD lighting signal, so that the LD 11 is turned on. The light emitted by turning on the LD 11 becomes parallel light or light having an arbitrary spread angle by passing through the projection lens 13 or the like to be projected onto an object to be detected (target object).

The light, which is projected onto the target object, is reflected by the target object. A part the of the reflected light is converged by the light receiving lens 23 so that the APD 21 receives the light. The APD 21 and the APD driving circuit 22 converts the light, which is received by the APD 21, into an electrical signal. The electrical signal is input to the time measurement circuit 40 as a received signal.

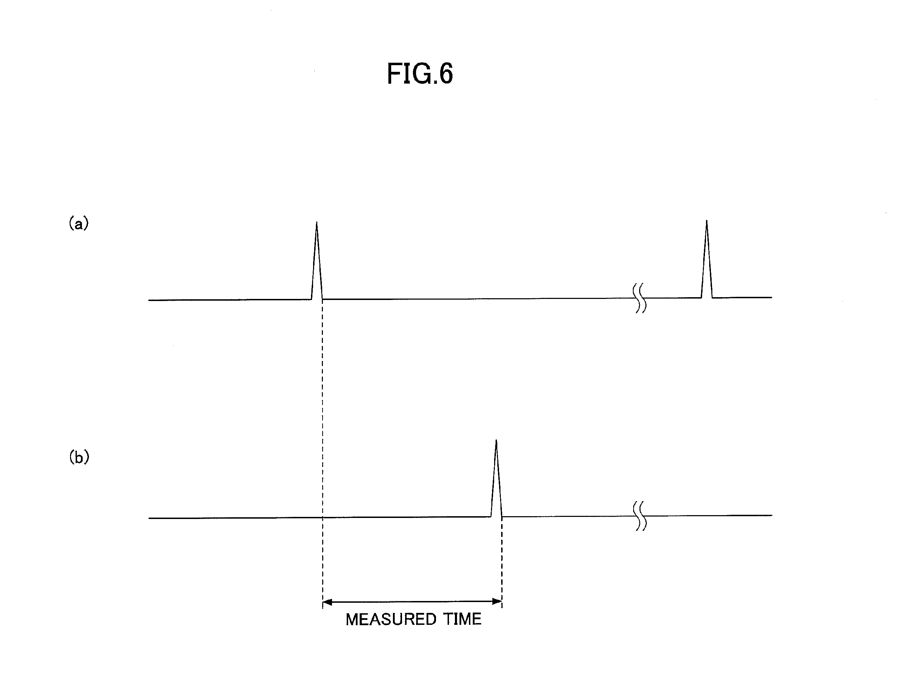

The time measurement circuit 40 compares a timing of the LD lighting signal as shown in part (a) of FIG. 6 with a timing of the received signal generated by receiving the light by the APD 21 ("APD received signal") as shown in part (b) of FIG. 6, so as to calculate a time period as measured time between when the light is emitted to be projected and when the reflected light is received.

The information indicating the measured time is output from the time measurement circuit 40 and is input to the control circuit 30. The control circuit 30 calculates the distance to the target object. Further, in the laser radar apparatus 100, a distance corresponding to a half of the measured time is calculated as the distance to the target object because the light travels back and forth between the laser radar apparatus 100 and the target object.

Further, for explanatory purposes, FIG. 5 illustrates a case where the light to be projected and the received light travels only in one direction. However, the projected light may be formed such that the light received by the APD 21 via the light receiving lens 23 has a wider range or such that a region where the light is received by the APD 21 may change over time.

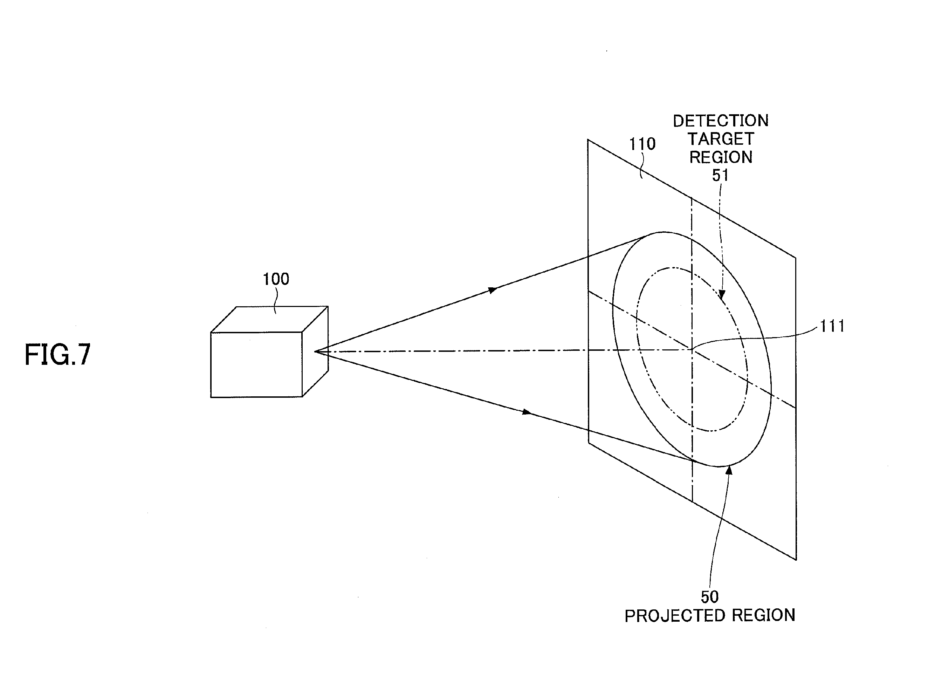

Next, a laser radar adjustment apparatus and a method of adjusting a laser radar are described. FIG. 7 illustrates a case where light from the laser radar apparatus 100 is projected onto a laser radar adjustment apparatus 110 according to an embodiment. in manufacturing the laser radar apparatus 100, the laser radar apparatus 100 is adjusted so that, on the laser radar adjustment apparatus 110, the center of a projected region 50 substantially coincides with the center of a detection target region 51.

Here, the projected region 50 has a substantially circular shape and is determined by the projected light from the laser radar apparatus 100, and the detection target region 51 also has a substantially circular shape and is to be detected.

In this adjustment, the laser radar apparatus 100 is further finely adjusted so that the projected region 50 covers the entire detection target region 51. By doing this, the light can be projected onto the entire range of the detection target region 51.

Further, in this embodiment, due to the adjustment as described above, it is assumed that the center of the projected region 50 and the center of the detection target region 51 are substantially coincident with a center part (center) 111 of the laser radar adjustment apparatus 110 according to this embodiment.

In this embodiment, by adjusting the APD 21 and the light receiving lens 23 of the light receiving section 20 (see FIG. 5) and the like using the laser radar adjustment apparatus 110, the light receiving axis of the laser radar apparatus 100 may be adjusted.

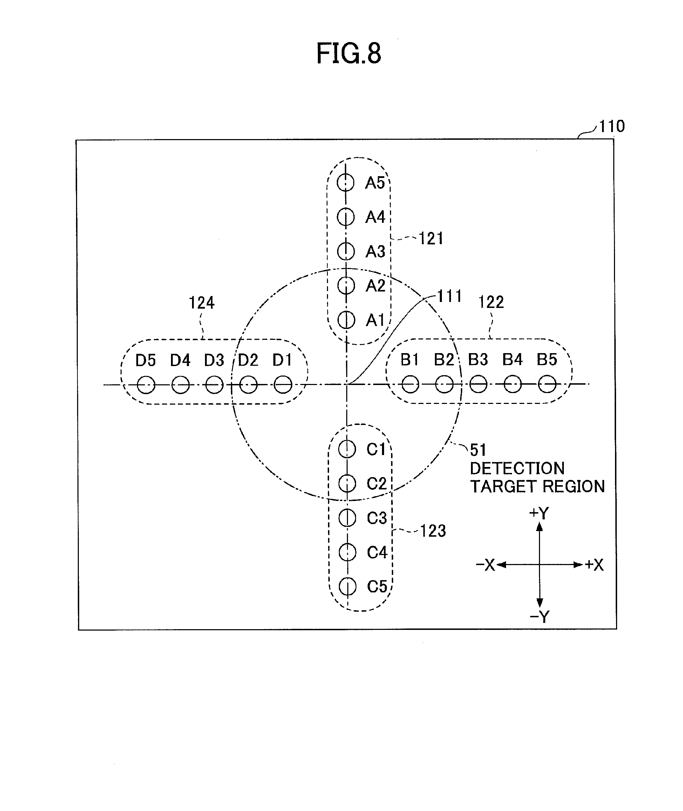

FIG. 8 illustrates a detail of the laser radar adjustment apparatus 110 in this embodiment. As shown in FIG. 8, the laser radar adjustment apparatus 110 includes light emitting section groups 121, 122, 123, and 124 which are arranged in a radial manner from the center part (center) 111 as the center of the radiation.

For example, in the case of FIG. 8, a first light emitting section group 121 is formed in the +Y direction; the second light emitting section group 122 is formed in the +X axis direction; the third light emitting section group 123 is formed in the -Y axis direction; and the fourth light emitting section group 124 is formed in the -X axis direction, from the center part (center) 111.

The first light emitting section group 121 includes light emitting sections A1, A2, A3, A4, and A5 that are arranged in this order from the center part (center) 111. The light emitting sections A1 and A2 are arranged in the detection target region 51. The light emitting sections A3, A4, and A5 are arranged outside the detection target region 51.

Further, the second light emitting section group 122 includes light emitting sections B1, B2, B3, B4, and B5 that are arranged in this order from the center part (center) 111. The light emitting sections B1 and B2 are arranged in the detection target region 51. The light emitting sections B3, B4, and B5 are arranged outside the detection target region 51.

Further, the third light emitting section group 123 includes light emitting sections C1, C2, C3, C4, and C5 that are arranged in this order from the center part (center) 111. The light emitting sections C1 and C2 are arranged in the detection target region 51. The light emitting sections C3, C4, and C5 are arranged outside the detection target region 51.

Further, the fourth light emitting section group 124 includes light emitting sections D1, D2, D3, D4, and D5 that are arranged in this order from the center part (center) 111. The light emitting sections D1 and D2 are arranged in the detection target region 51. The light emitting sections D3, D4, and D5 are arranged outside the detection target region 51. As described above, the laser radar adjustment apparatus 110 includes a plurality of light emitting sections A1 to A5, B1 to B5, C1 to C5, and D1 to D5.

Further, in this embodiment, each of the light emitting sections A1 to A5, B1 to B5, C1 to C5, and D1 to D5 is a device that emits light having a wavelength which is detectable by the laser radar apparatus 100 in this embodiment. For example, each of the light emitting sections may be formed of a Light Emitting Diode (LED) or the like. Further, in a case where a range of the wavelength detectable by the laser radar apparatus 100 in this embodiment is the infrared range, each of the light emitting sections A1 to A5, B1 to B5, C1 to C5, and D1 to D5 is a device that emits infrared light.

In this case, the infrared light is not light in a visible range. Therefore, as described above, each of the light emitting sections A1 to A5, B1 to B5, C1 to C5, and D1 to D5 may be formed of a pair of the devices: a device that emits infrared light and a device that emits visible light in a red color or the like. Further, in a case where a range of the wavelength detectable by the laser radar apparatus 100 in this embodiment is the ultraviolet range, each of the light emitting sections A1 to A5, B1 to B5, C1 to C5, and D1 to D5 is a device that emits ultraviolet light.

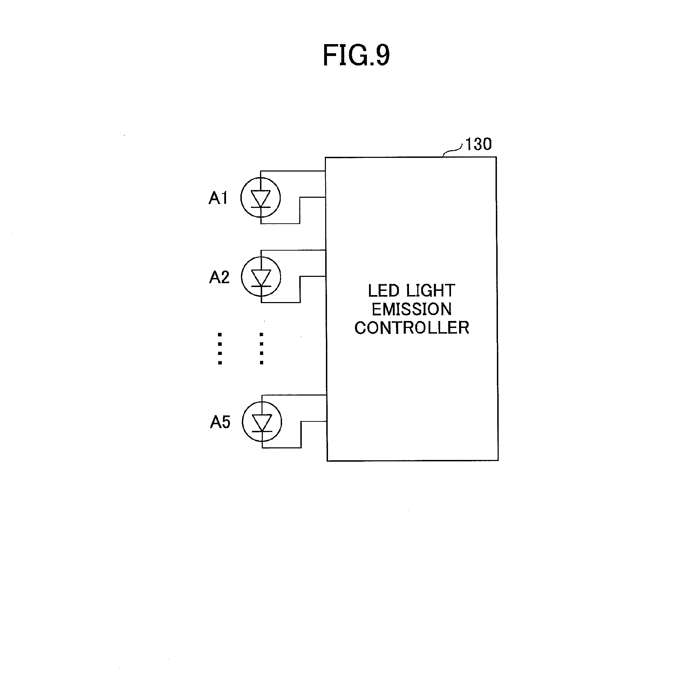

Further, as shown in FIG. 9, in the laser radar adjustment apparatus 110 according to this embodiment, each of the light emitting sections A1 to A5, B1 to B5, C1 to C5, and D1 to D5 is connected to an LED light emission controller 130 which serves as a light emitting control section provided in the laser radar adjustment apparatus 110.

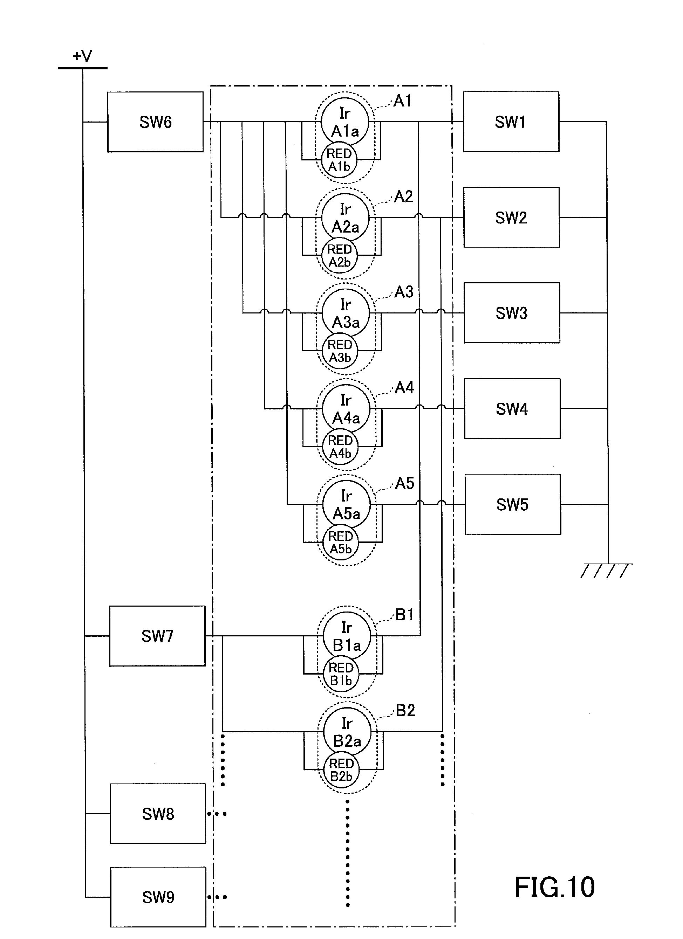

Further, as shown in FIG. 10, the LED light emission controller 130 includes nine switches SW1, SW2, SW3, SW4, SW5, SW6, SW7, SW8, and SW9. Further, due to space limitations, FIG. 10 shows only the first light emitting section group 121 and a part of the second light emitting section group 122.

Namely, the descriptions of the third and fourth light emitting section groups 123 and 124 as well as the rest of the second light emitting section group 122 are herein omitted. In the LED light emission controller 130, one terminal of each of the switches SW1, SW2, SW3, SW4, and SW5 is grounded (to a GND voltage). Further, a predetermined voltage (+V) is applied to one terminal of each of the switches SW6, SW7, SW8, and SW9.

The other terminal of the switch SW1 is connected to one terminal of each of the light emitting sections A1, B1, C1, and D1. Similarly, the other terminal of the switch SW2 is connected to one terminal of each of the light emitting sections A2, B2, C2, and D2.

Further, the other terminal of the switch SW3 is connected to one terminal of each of the light emitting sections A3, B3, C3, and D3. Further, the other terminal of the switch SW4 is connected to one terminal of each of the light emitting sections A4, B4, C4, and D4. Further, the other terminal of the switch SW5 is connected to one terminal of each of the light emitting sections A5, B5, C5, and D5.

Further, the other terminal of the switch SW6 is connected to the other terminal of each of the light emitting sections A1, A2, A3, A4, and A5. Similarly, the other terminal of the switch SW7 is connected to the other terminal of each of the light emitting sections B1, B2, B3, B4, and B5.

Further, the other terminal of the switch SW8 is connected to the other terminal of each of the light emitting sections C1, C2, C3, C4, and C5. Further, the other terminal of the switch SW9 is connected to the other terminal of each of the light emitting sections D1, D2, D3, D4, and D5.

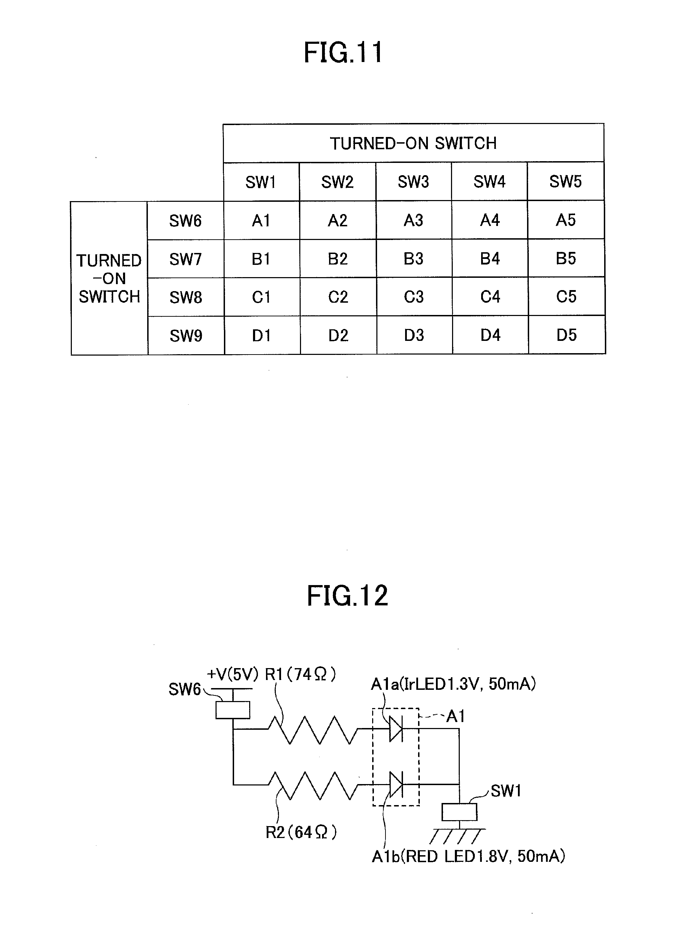

FIG. 11 illustrates relationships indicating which light emitting section can emit light when which switches are turned on. Specifically, the light emitting section A1 emits light when switches SW1 and SW6 are turned on; the light emitting section A2 emits light when switches SW2 and SW6 are turned on; the light emitting section A3 emits light when switches SW3 and SW6 are turned on; the light emitting section A4 emits light when switches SW4 and SW6 are turned on; the light emitting section A5 emits light when switches SW5 and SW6 are turned on.

Further, the light emitting section B1 emits light when switches SW1 and SW7 are turned on; the light emitting section B2 emits light when switches SW2 and SW7 are turned on; the light emitting section B3 emits light when switches SW3 and SW7 are turned on; the light emitting section B4 emits light when switches SW4 and SW7 are turned on; the light emitting section B5 emits light when switches SW5 and SW7 are turned on.

Further, the light emitting section C1 emits light when switches SW1 and SW8 are turned on; the light emitting section C2 emits light when switches SW2 and SW8 are turned on; the light emitting section C3 emits light when switches SW3 and SW8 are turned on; the light emitting section C4 emits light when switches SW4 and SW8 are turned on; the light emitting section C5 emits light when switches SW5 and SW8 are turned on.

Further, the light emitting section D1 emits light when switches SW1 and SW9 are turned on; the light emitting section D2 emits light when switches SW2 and SW9 are turned on; the light emitting section D3 emits light when switches SW3 and SW9 are turned on; the light emitting section D4 emits light when switches SW4 and SW9 are turned on; the light emitting section D5 emits light when switches SW5 and SW9 are turned on.

Further, an operation of each of the switches SW1, SW2, SW3, SW4, SW5, SW6, SW7, SW8, and SW9 may be performed by an operator, a controller or the like.

Further, as described above, each of the light emitting sections A1 to A5, B1 to B5, C1 to C5, and D1 to D5 may be formed of a pair of the devices: a device that emits infrared light and a device that emits visible light in a red color or the like. Specifically, as shown in FIG. 12, the light emitting section A1, for example, may be formed of a pair of an infrared light emitting device A1a and a red-colored light emitting device A1b. In this case, for example, when the infrared light emitting device A1a is an infrared-light LED (1.3 V, 50 mA) that emits infrared light, a resistor R1 of 74 Ω is connected to the infrared light emitting device A1a. Further, when the red-colored light emitting device A1b is a red-colored light LED, a resistor R2 of 64 Ω is connected to the red-colored light emitting device A1b.

Similarly, as shown in FIG. 10 as well, the light emitting section A2 may be formed of a pair of an infrared light emitting device A2a and a red-colored light emitting device A2b; the light emitting section A3 may be formed of a pair of an infrared light emitting device A3a and a red-colored light emitting device A3b; the light emitting section A4 may be formed of a pair of an infrared light emitting device A4a and a red-colored light emitting device A4b; the light emitting section A5 may be formed of a pair of an infrared light emitting device A5a and a red-colored light emitting device A5b; the light emitting section B1 may be formed of a pair of an infrared light emitting device B1a and a red-colored light emitting device B1b; and the light emitting section B2 may be formed of a pair of an infrared light emitting device B2a and a red-colored light emitting device B2b.

Further, each of the other light emitting sections B3, B4, C1 to C5, and D1 to D5 (not shown) may also be formed of a pair of the infrared light emitting device and the red-colored light emitting device.

Further, if the light receiving device in the laser radar apparatus 100 undesirably detects visible light due to the light receiving characteristics thereof, a switch (now shown) to control the light emission of the red-colored light emitting device may also be provided, so as to emit the red-colored light only when the visible light is also necessary.

### A method of adjusting a laser radar

Next, a method of adjusting a laser radar according to this embodiment is described. The method of adjusting a laser radar according to this embodiment is performed by using the laser radar adjustment apparatus 110 according to this embodiment.

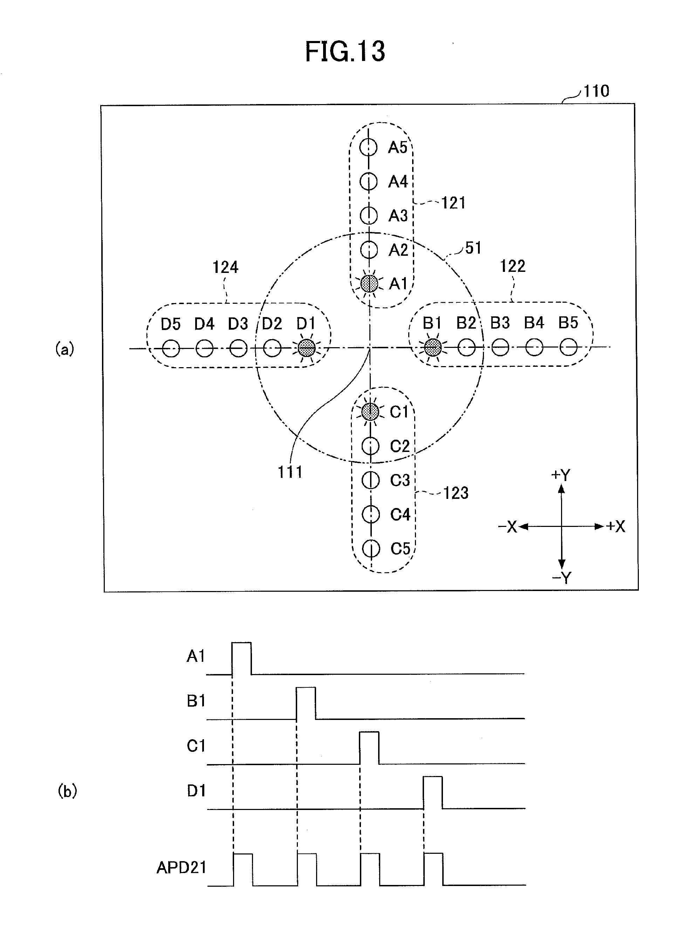

First, as shown in part (a) of FIG. 13, in the light emitting section groups 121, 122, 123, and 124 of the laser radar adjustment apparatus 110, only the light emitting sections, which are closer to the center part (center) 111 than any other light emitting sections in the respective light emitting section groups (i.e., the light emitting sections A1, B1, C1, and D1), emit the light.

In this case, the light emitting sections A1, B1, C1, and D1 sequentially emit light in accordance with the timings illustrated in part (b) of FIG. 13. Namely, those light emitting sections sequentially emit light in the order of the light emitting sections A1, B1, C1, and D1.

Here, when the region which is to be detected by the laser radar adjustment apparatus 110 is positioned at the desired position, namely when the detection target region 51 coincides with the region which is to be actually detected, the light emitting sections A1, B1, C1, and D1 are included in the detection target region 51.

Therefore, as shown in part (b) of FIG. 13, light emitted from each of the light emitting sections A1, B1, C1, and D1 is detected by the APD 21, and the corresponding received signal is output via the APD driving circuit 22.

Further, in this process, any light emitting section other than the light emitting sections A1, B1, C1, and D1 does not emit light. Namely, the light emission from any of the light emitting sections other than the light emitting sections A1, B1, C1, and D1 is stopped.

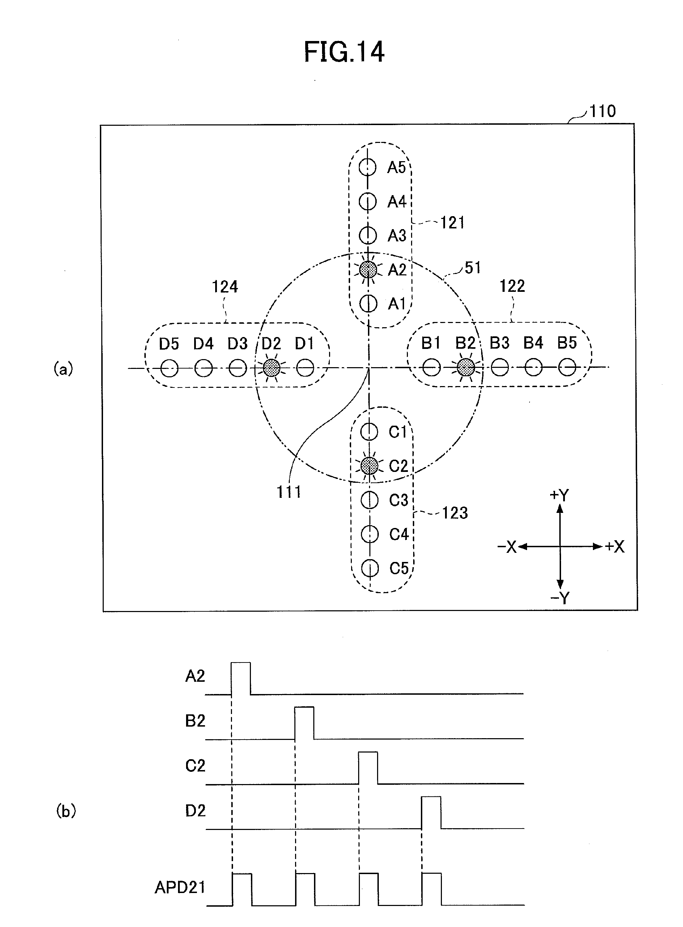

Next, as shown in part (a) of FIG. 14, in the light emitting section groups 121, 122, 123, and 124 of the laser radar adjustment apparatus 110, only the light emitting sections, which are the second closest to the center part (center) 111 among the light emitting sections in the respective light emitting section groups (i.e., the light emitting sections A2, B2, C2, and D2), emit the light.

In this case, the light emitting sections A2, B2, C2, and D2 sequentially emit light in accordance with the timings illustrated in part (b) of FIG. 14. Namely, those light emitting sections sequentially emit light in the order of the light emitting sections A2, B2, C2, and D2.

Here, when the region which is to be detected by the laser radar adjustment apparatus 110 is positioned at the desired position, namely when the detection target region 51 coincides with the region which is to be actually detected, the light emitting sections A2, B2, C2, and D2 are included in the detection target region 51.

Therefore, as shown in part (b) of FIG. 14, each of light emitted from each of the light emitting sections A2, B2, C2, and D2 is detected by the APD 21, and the corresponding received signal is output via the APD driving circuit 22.

Further, in this process, any light emitting section other than the light emitting sections A2, B2, C2, and D2 does not emit light. Namely, the light emission from any of the light emitting sections other than the light emitting sections A2, B2, C2, and D2 is stopped.

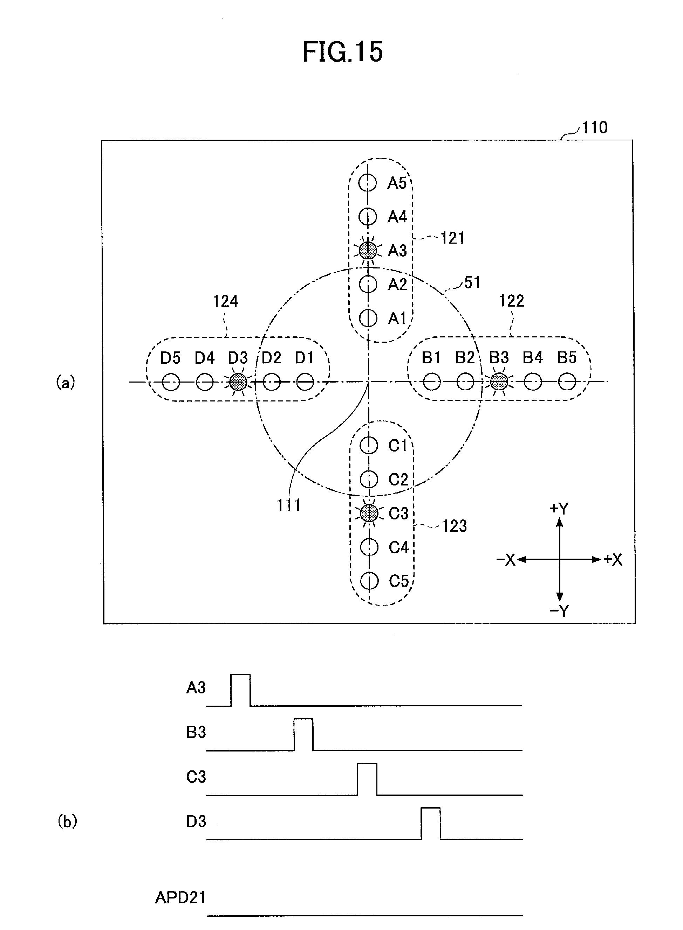

Next, as shown in part (a) of FIG. 15, in the light emitting section groups 121, 122, 123, and 124 of the laser radar adjustment apparatus 110, only the light emitting sections, which are the third closest to the center part (center) 111 among the light emitting sections in the respective light emitting section groups (i.e., the light emitting sections A3, B3, C3, and D3), emit the light.

In this case, the light emitting sections A3, B3, C3, and D3 sequentially emit light in accordance with the timings illustrated in part (b) of FIG. 15. Namely, those light emitting sections sequentially emit light in the order of the light emitting sections A3, B3, C3, and D3.

Here, when the region which is to be detected by the laser radar adjustment apparatus 110 is positioned at the desired position, namely when the detection target region 51 coincides with the region which is to be actually detected, any of the light emitting sections A3, B3, C3, and D3 exist outside the detection target region 51.

Therefore, as shown in part (b) of FIG. 15, none of the light emitted from the light emitting sections A3, B3, C3, and D3 is detected by the APD 21, and no received signal is output via the APD driving circuit 22.

Further, in this process, any light emitting section other than the light emitting sections A3, B3, C3, and D3 does not emit light. Namely, the light emission from any of the light emitting sections other than the light emitting sections A3, B3, C3, and D3 is stopped.

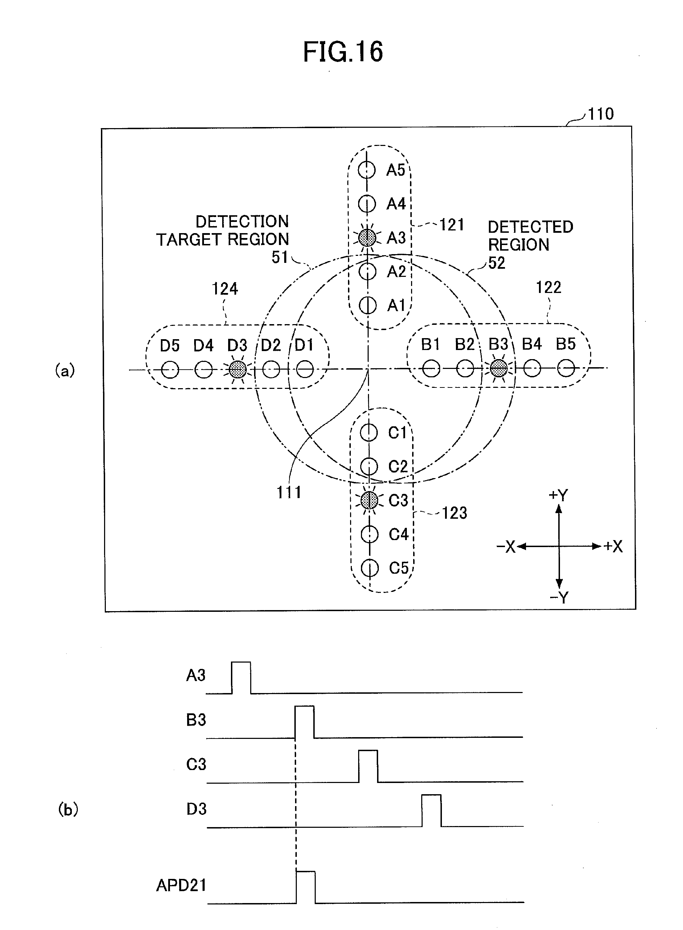

Here, as shown in part (a) of FIG. 16, if the region 52, which is to be actually detected by the laser radar apparatus 100, is shifted in the +X direction, namely, if the actually detected region 52 is shifted from the detection target region 51, in the +X direction, as shown in part (b) of FIG. 16, the light emitted from the light emitting section B3 may be detected by the APD 21, and the corresponding received signal is output via the APD driving circuit 22.

In such a case, the positions of the APD 21 and the light receiving lens 23 of the light receiving section 20 (see FIG. 5) and the like are adjusted so as not to detect the light from the light emitting section B3 as shown in part (b) of FIG. 15. By doing this, the detection target region 51 may substantially coincide with the region which is to be actually detected, and the laser radar apparatus 100 may be adjusted.

Further, in this embodiment, it may become possible to adjust the laser radar apparatus 100 in a shorter time period with the laser radar adjustment apparatus 110 according to this embodiment based on the following method.

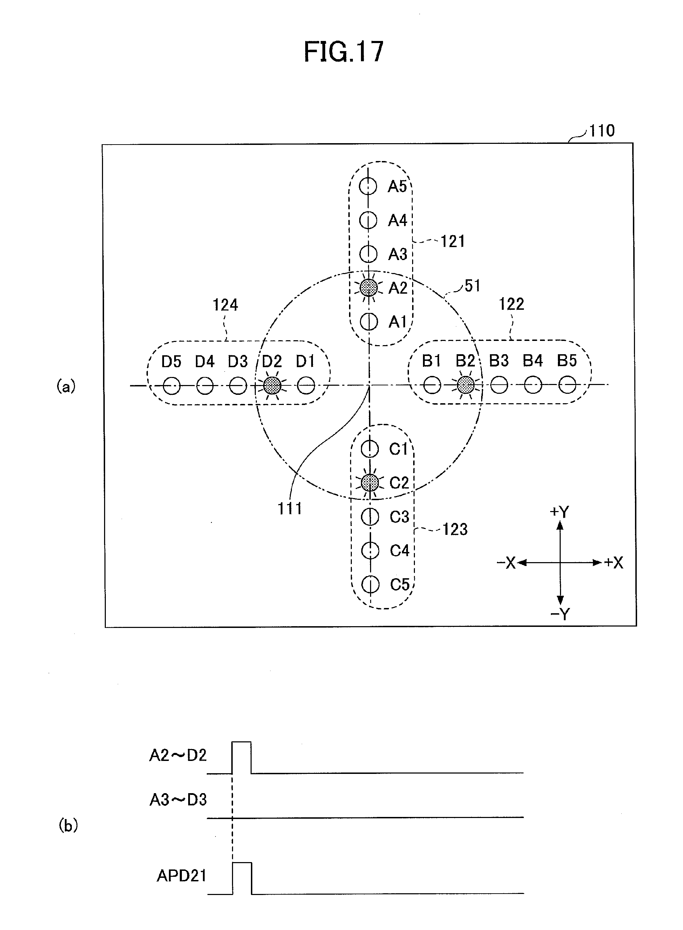

Specifically, as shown in part (a) of FIG. 17, in the light emitting section groups 121, 122, 123, and 124 of the laser radar adjustment apparatus 110, only the outermost light emitting sections within the detection target region 51, which correspond to the second closest to the center part (center) 111, among the light emitting sections in the respective light emitting section groups (i.e., the light emitting sections A2, B2, C2, and D2) emit the light simultaneously.

In this case, the light emitting sections A2, B2, C2, and D2 emit light at the same timing in accordance with the timing illustrated in part (b) of FIG. 17.

In this case, when the region which is to be detected by the laser radar adjustment apparatus 110 is positioned at the desired position, namely when the detection target region 51 coincides with the region which is to be actually detected, the light emitting sections A2, B2, C2, and D2 exist within the detection target region 51.

Therefore, as shown in part (b) of FIG. 17, the light emitted by the light emitting sections A2, B2, C2, and D2 is detected by the APD 21, and the corresponding received signal is output via the APD driving circuit 22.

Further, in this process, any light emitting section other than the light emitting sections A2, B2, C2, and D2 does not emit light. Namely, the light emission from any of the light emitting sections other than the light emitting sections A2, B2, C2, and D2 is stopped.

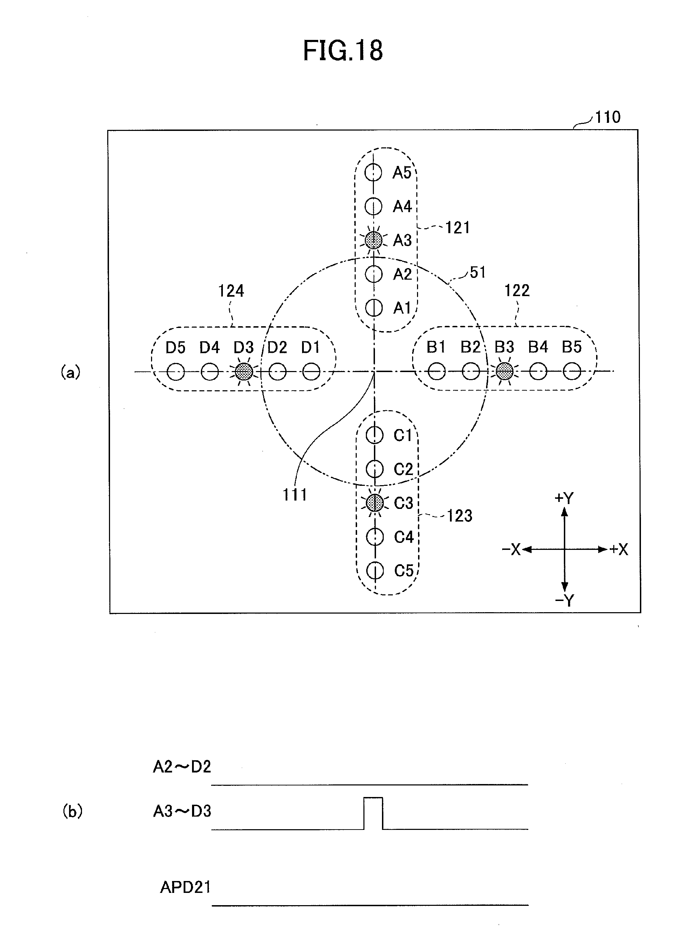

Next, as shown in part (a) of FIG. 18, in the light emitting section groups 121, 122, 123, and 124 of the laser radar adjustment apparatus 110, only the innermost light emitting sections outside the detection target region 51, (i.e., the light emitting sections closest to the center part (center) 111 among the light emitting sections existing outside the detection target region 51) which correspond to the light emitting sections which are the third closest to the center part (center) 111 among the light emitting sections in the respective light emitting section groups (i.e., the light emitting sections A3, B3, C3, and D3) emit the light simultaneously.

In this case, the light emitting sections A3, B3, C3, and D3 emit light at the same timing in accordance with the timing illustrated in part (b) of FIG. 18.

In this case, when the region which is to be detected by the laser radar adjustment apparatus 110 is positioned at the desired position, namely when the detection target region 51 coincides with the region which is to be actually detected, the light emitting sections A3, B3, C3, and D3 exist outside the detection target region 51.

Therefore, as shown in part (b) of FIG. 18, the light emitted by the light emitting sections A3, B3, C3, and D3 is not detected by the APD 21, and no received signal is output via the APD driving circuit 22.

Further, in this process, any light emitting section other than the light emitting sections A3, B3, C3, and D3 does not emit light. Namely, the light emission from any of the light emitting sections other than the light emitting sections A3, B3, C3, and D3 is stopped.

Therefore, the APD 21 and the light receiving lens 23 of the light receiving section 20 (see FIG. 5) and the like are adjusted so that when the light emitting sections A2, B2, C2, and D2 are driven to emit light as shown in part (a) of FIG. 17, the light is detected by the APD 21 and the corresponding received signal is output and when the light emitting sections A3, B3, C3, and D3 are driven to emit light as shown in part (a) of FIG. 18, no light is detected by the APD 21 and accordingly no received signal is output. By doing this, the region to be actually detected may coincide with the detection target region 51, and the laser radar apparatus 100 may be adjusted.

Further, there may be a case where due to the positions of the APD 21, the light receiving lens 23 or the like, the light mount of the light emit from one or four light emitting sections may become insufficient so that no light may be detected by the APD 21.

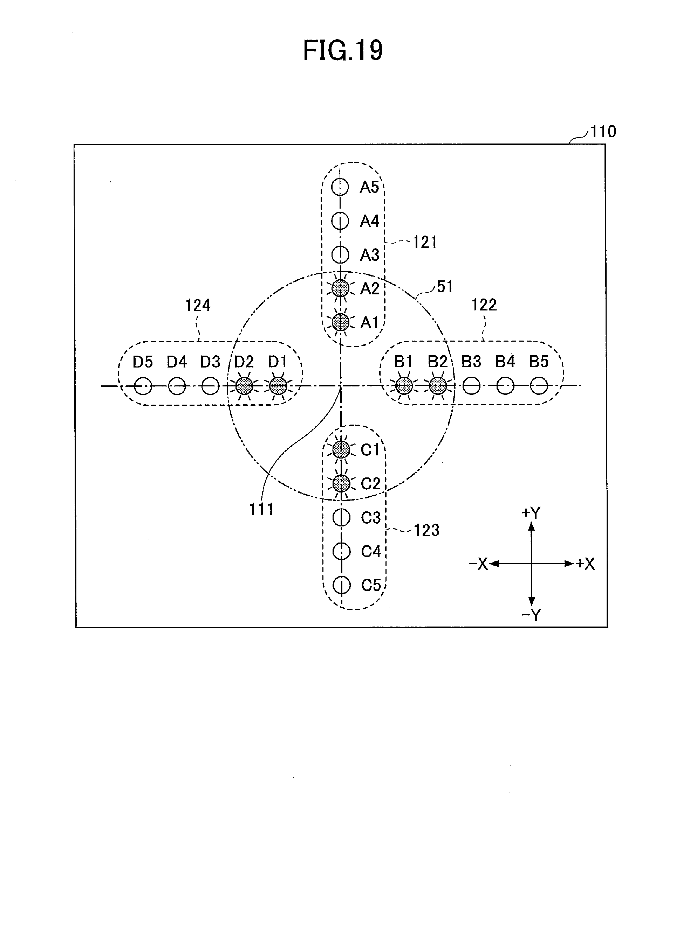

In such a case, unlike the case as illustrated in part (a) of FIG. 17, as shown in FIG. 19, in the light emitting section groups 121, 122, 123, and 124 of the laser radar adjustment apparatus 110, all the light emitting sections within the detection target region 51, (i.e., all the light emitting sections A1, B1, C1, D1, A2, B2, C2 and D2) emit the light to compensate for an insufficient light amount.

In this process, the light emission from any of the light emitting sections other than the light emitting sections A1, B1, C1, D1, A2, B2, C2 and D2 is stopped.

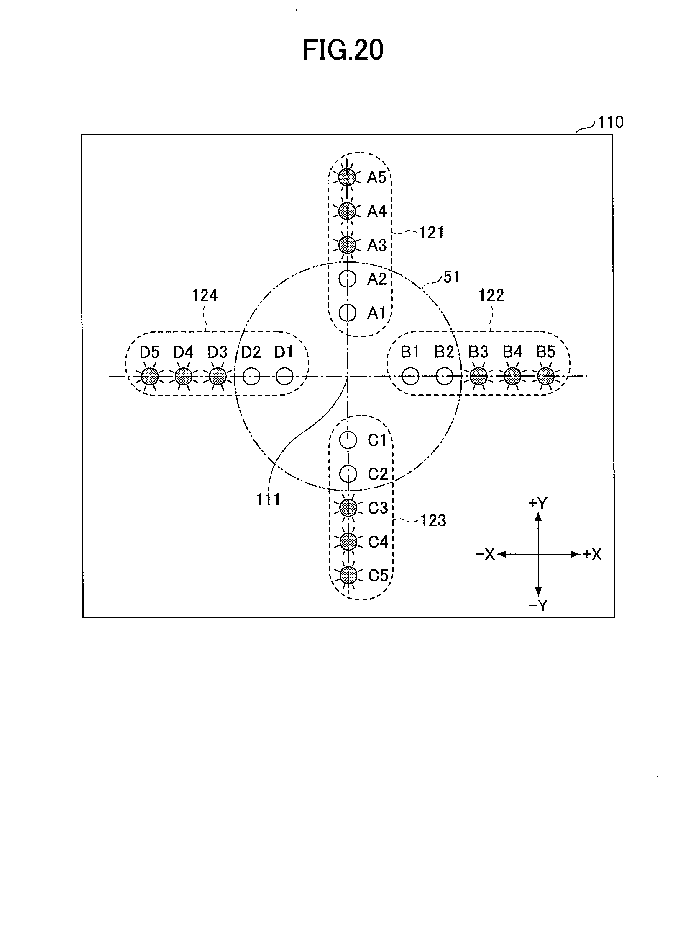

Similarly, unlike the case as illustrated in part (a) of FIG. 18, as shown in FIG. 20, in the light emitting section groups 121, 122, 123, and 124 of the laser radar adjustment apparatus 110, all the light emitting sections outside the detection target region 51, (i.e., all the light emitting sections A3, B3, C3, D3, A4, B4, C4, D4, A5, B5, C5 and D5) emit the light to compensate insufficient light amount.

In this process, the light emission from any of the light emitting sections other than the light emitting sections A3, B3, C3, D3, A4, B4, C4, D4, A5, B5, C5 and D5 is stopped.

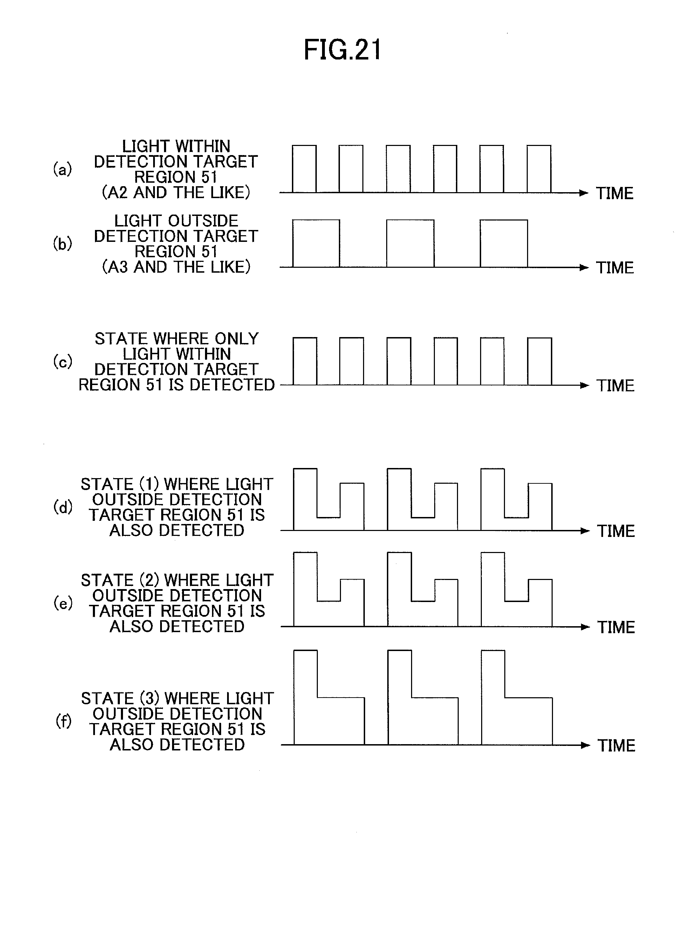

Further, in the above description, a case is described where the timing when the light emitting sections A2 and the like is shifted from the timing when the light emitting sections A3 and the like. However, as shown in parts (a) and (b) of FIG. 21, the light emitting sections A2 and the like (i.e., A2, B2, C2, and D2) and the light emitting sections A3 (i.e., A3, B3, C3, and D3) and the like may repeatedly emit light based on the respective cycles which are different from each other.

Here, when the region which is to be detected by the laser radar adjustment apparatus 110 is positioned at the desired position, namely when the detection target region 51 coincides with the region which is to be actually detected, the light emitting sections A2 and the like exist within the detection target region 51 and the light emitting sections A2 and the like exist outside the detection target region 51.

Therefore, as shown in part (c) of FIG. 21, the light, which is emitted at the emission cycle of the light emitting sections A2 and the like, is detected by the APD 21, but the light, which is emitted at the emission cycle of the light emitting sections A3 and the like, is not detected by the APD 21. As a result, the received signal based on the emission cycle of the light emitting sections A2 and the like is output via the APD driving circuit 22.

On the other hand, when the detection target region 51 does not coincide with the region which is to be actually detected, not only the light emitted from the light emitting sections A2 and the like which exist within the detection target region 51 but also the light emitted from the light emitting sections A3 and the like which exist outside the detection target region 51 may be detected.

Therefore, as shown in parts (d), (e), and (f) of FIG. 21, the received signal, which is output via the APD driving circuit, may be output in a manner such that the received signal based on the emission cycle of the light emitting sections A2 and the like overlaps with the received signal based on the emission cycle of the light emitting sections A3 and the like.

Therefore, in such a case, the positions of the APD 21, the light receiving lens 23 and the like in the light receiving section 20 are adjusted so that the received signal outputs as illustrated in part (c) of FIG. 21.

### Second embodiment

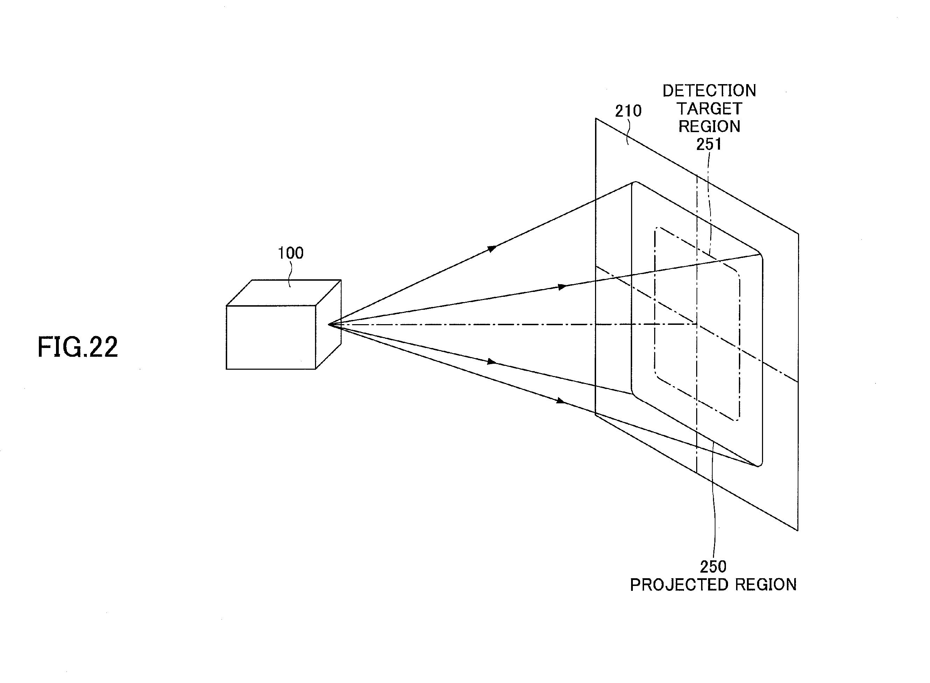

Next, a second embodiment is described. FIG. 22 illustrates a case where the light from the laser radar apparatus 100 is projected onto a laser radar adjustment apparatus 210 according to this embodiment. In this embodiment, a case is described where the shape of a projection region 250 onto which the light from the laser radar apparatus 100 is projected and the shape of a detection target region 251 corresponding to the region where the light is to be detected are substantially rectangular.

The laser radar adjustment apparatus 210 according to this embodiment is adjusted so that the center of the projection region 250 substantially coincides with the center of the detection target region 251. In this case, fine adjustment is further performed so that the projection region 250 covers the entire detection target region 251.

By doing this, the emitted light may be projected onto the entire detection target region 251. Further, in this embodiment, by using the laser radar adjustment apparatus 210, the adjustment is performed on the APD 21, the light receiving lens 23 and the like in the light receiving section 20 of the laser radar apparatus 100.

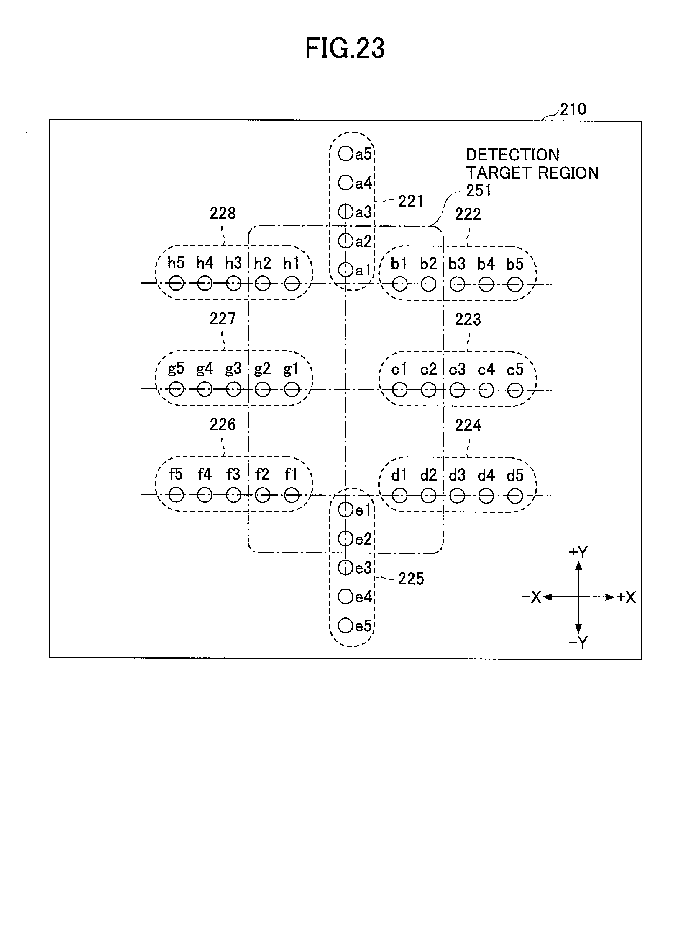

FIG. 23 shows more detail of the laser radar adjustment apparatus 210 in this embodiment. As shown in FIG. 23, the laser radar adjustment apparatus 210 includes light emitting section groups 221 through 228. Each of the light emitting section groups 221 through 228 is arranged in a manner such that the arrangement direction of the light emitting sections of each of the light emitting section groups is vertical to the direction of the line indicating the shape of the detection target region 251.

Further, in this embodiment, it is assumed that the longitudinal direction of the detection target region 251 is directed along the Y axis direction and the lateral direction of the detection target region 251 is directed along the X axis direction.

Specifically, in the case of FIG. 23, the laser radar adjustment apparatus 210 includes a first light emitting section group 221 whose longitudinal direction extends along the +Y direction, second, third, and fourth light emitting section groups 222, 223, and 234, respectively, whose longitudinal direction extends along the +X direction, a fifth light emitting section group 225 whose longitudinal direction extends along the -Y direction, sixth, seventh, and eighth light emitting section groups 226, 227, and 238, respectively, whose longitudinal direction extends along the -X direction.

The first light emitting section group 221 includes light emitting sections a1, a2, a3, a4, and a5, which are arranged in this order from an inner side to an outer side. Further, the light emitting sections a1 and a2 are disposed within the detection target region 251, and the light emitting sections a3, a4, and a5 are disposed outside the detection target region 251.

Further, the second light emitting section group 222 includes light emitting sections b1, b2, b3, b4, and b5, which are arranged in this order from an inner side to an outer side. Further, the light emitting sections b1 and b2 are disposed within the detection target region 251, and the light emitting sections b3, b4, and b5 are disposed outside the detection target region 251.

Further, the third light emitting section group 223 includes light emitting sections c1, c2, c3, c4, and c5, which are arranged in this order from an inner side to an outer side. Further, the light emitting sections c1 and c2 are disposed within the detection target region 251, and the light emitting sections c3, c4, and c5 are disposed outside the detection target region 251.

Further, the fourth light emitting section group 224 includes light emitting sections d1 d2, d3, d4, and d5, which are arranged in this order from an inner side to an outer side. Further, the light emitting sections d1 and d2 are disposed within the detection target region 251, and the light emitting sections d3, d4, and d5 are disposed outside the detection target region 251.

Further, the fifth light emitting section group 225 includes light emitting sections e1, e2, e3, e4, and e5, which are arranged in this order from an inner side to an outer side. Further, the light emitting sections e1 and e2 are disposed within the detection target region 251, and the light emitting sections e3, e4, and e5 are disposed outside the detection target region 251.

Further, the sixth light emitting section group 226 includes light emitting sections f1 f2, f3, f4, and f5, which are arranged in this order from an inner side to an outer side. Further, the light emitting sections f1 and f2 are disposed within the detection target region 251, and the light emitting sections f3, f4, and f5 are disposed outside the detection target region 251.

Further, the seventh light emitting section group 226 includes light emitting sections g1, g2, g3, g4, and g5, which are arranged in this order from an inner side to an outer side. Further, the light emitting sections g1 and g2 are disposed within the detection target region 251, and the light emitting sections g3, g4, and g5 are disposed outside the detection target region 251.

Further, the eighth light emitting section group 226 includes light emitting sections h1, h2, h3, h4, and h5, which are arranged in this order from an inner side to an outer side. Further, the light emitting sections h1 and h2 are disposed within the detection target region 251, and the light emitting sections h3, h4, and h5 are disposed outside the detection target region 251.

Further, in this embodiment, similar to the method according to the first embodiment, the laser radar apparatus 100 may be adjusted by using the laser radar adjustment apparatus 210.

In the laser radar adjustment apparatus 210 according to this embodiment, the adjustment in the Y axis direction is performed by using the first and fifth light emitting section groups 221 and 225. Further, the adjustment in the Y axis direction is performed by using the second, third, fourth, sixth, seventh, and eighth light emitting section groups 222, 223, 224, 226, 227, and 228.

Further, by comparing the shift amount between the second and fourth light emitting section groups 222 and 224 with the shift amount between the sixth and eighth light emitting section groups 226 and 228, it may become possible to determine whether the region detected by the laser radar apparatus 100 is tilted.

Further, by determining which of the light emitting sections of the second, third, fourth, sixth, seventh, and eighth light emitting section groups 222, 223, 224, 226, 227, and 228, respectively, are detected, it may become possible to determine whether the shape of the region detected by the laser radar apparatus 100 is bent in a dogleg shape.

As described above, according to this embodiment, even when the shape of the detection target region 251 is a substantially rectangular shape, the laser radar apparatus 100 may be adjusted similar to the first embodiment described above.

The configurations other than the configuration described above in this embodiment are the same as those in the first embodiment.

In the above description, a case is described where the number of the light emitting sections in one light emitting section group is five. However, the number of the light emitting sections may be four or less or six or more. This also applied to the number of the light emitting section groups.

Further, when it is possible to perform similar adjustment by combining with another method, the number of the light emitting sections and the number of the light emitting section groups may be one. Further, as the light emitting section, any appropriate device other than the LED may be used. For example, a laser diode (LD), a lamp or the like that emits light having a predetermined wavelength may be used. Further, any appropriate device that radiates electromagnetic waves having a predetermined wavelength may be used.

Further, for example, the laser radar adjustment apparatus may further include a diffuser panel in front of the light emitting sections. Further, for example, the LEDs may be arranged in a line or in a matrix manner (i.e., in an array manner).

Further, in the above description, the laser radar adjustment apparatus that controls the emission state and non-emission state of the LEDs are described. To that end, according to this embodiment, a shutter or the like may be provided in front of each of the LEDs or the like. Then, the control of selecting the emission state and non-emission state may be performed by opening and closing the shutter while the LEDs or the like continuously emit light.

Further, in the above description, a case is described where the laser radar adjustment apparatus includes a plurality of LEDs which are arranged in two dimension. However, the laser radar adjustment apparatus according to this embodiment may use a display or the like, which may emit infrared light, rather than LEDs or the like. Such displays include an Electron Luminescence (EL) display, a liquid crystal display, a plasma display or the like that may emit infrared light.

Further, in the above description, the shape of the detection target region of the laser radar apparatus is substantially a circular or rectangular shape. However, the detection target region may have any other shape.

Further, as described in embodiments, highly-accurate adjustment may be performed means that it is possible to highly-accurately manufacture the laser radar apparatus.

According to an embodiment of the present invention, a laser radar adjustment apparatus is provided for adjusting a laser radar apparatus that includes a light source to project light onto an object to be detected and a light receiving section to detect light that is projected by the light source and reflected by the object to be detected.

The laser radar adjustment apparatus includes a first light emitting unit emitting light and being provided within a detection target region that is to be detected by the light receiving section; a second light emitting unit emitting light and being provided outside the detection target region; and an emission controller controlling emissions of the first and second light emitting units by causing the first and second light emitting units to emit light, so that the light receiving section is adjusted.

According to an embodiment of the present invention, a laser radar adjustment apparatus is provided for adjusting a laser radar apparatus that includes a light source to project light onto an object to be detected and a light receiving section to detect light that is projected by the light source and reflected by the object to be detected.

The laser radar adjustment apparatus includes a light emitting unit emitting light and being provided within a detection target region that is to be detected by the light receiving section; and an emission controller controlling emission of the light emitting unit by causing the light emitting units to emit light, so that the light receiving section is adjusted.

According to an embodiment of the present invention, a method of adjusting a laser radar adjustment apparatus is provided for adjusting a laser radar apparatus that includes a light source to project light onto an object to be detected and a light receiving section to detect light that is projected by the light source and reflected by the object to be detected.

The method includes a first emitting step of causing a first light emitting unit, which is included in the laser radar adjustment apparatus and is provided within a detection target region that is to be detected by the light receiving section, to emit light; a second emitting step of causing a second light emitting unit, which is included in the laser radar adjustment apparatus and is provided outside the detection target region, to emit light; and an adjusting step of adjusting the light receiving section so that the light emitted by the first light emitting unit is detected and light emitted by the second light emitting unit is not detected.

According to an embodiment, it may become possible to provide a laser radar adjustment apparatus for highly-accurately adjusting a light receiving section of a laser radar apparatus which may be mounted on a vehicle and the like and also provide a method of adjusting the laser radar.

## Claims

1. A laser radar adjustment apparatus for adjusting a laser radar apparatus that includes a light source to project light onto an object to be detected and a light receiving section to detect light that is projected by the light source and reflected by the object to be detected, the laser radar adjustment apparatus comprising:
a first light emitting unit configured to emit light, wherein the first light emitting unit is provided within a detection target region that is to be detected by the light receiving section;
an emission controller configured to control emission of the light emitting unit by causing the light emitting unit to emit light, so the that light receiving section is adjusted.

2. The laser radar adjustment apparatus according to claim 1, further comprising:
a second light emitting unit configured to emit light, wherein the second light emitting unit is provided outside the detection target region; and
wherein the emission controller is configured to control emissions of the first and second light emitting units by causing the first and second light emitting units to emit light, so that the light receiving section is adjusted.

3. The laser radar adjustment apparatus according to claim 2,
wherein the emission controller is configured to control the emissions of the first and second light emitting units so that a timing when the first light emitting unit emits light is different from a timing when the second light emitting unit emits light or a cycle on which the first light emitting unit emitting light is based is different from a cycle on which the second light emitting unit emitting light is based.

4. The laser radar adjustment apparatus according to claim 2 or 3,
wherein a shape of the detection target region is circular,
wherein a number of the first light emitting unit and a number of the second light emitting unit is two or more, and
wherein the first and second light emitting units are arranged in a radial manner from a center of the detection target region.

5. The laser radar adjustment apparatus according to claim 2 or 3,
wherein a shape of the detection target region is rectangular,
wherein a number of the first light emitting unit and a number of the second light emitting unit is two or more, and
wherein the first and second light emitting units are arranged in a direction that is vertical to a direction of a line defining the shape of the detection target region at a position where the first and second light emitting units cross the line.

6. The laser radar adjustment apparatus according to any one of claims 2 through 5,
wherein each of the first and second light emitting units includes a device that emits visible light and a device that emits ultraviolet light or infrared light.

7. A method of adjusting a laser radar adjustment apparatus for adjusting a laser radar apparatus that includes a light source to project light onto an object to be detected and a light receiving section to detect light that is projected by the light source and reflected by the object to be detected, the method comprising:
a first emitting step of causing a first light emitting unit, which is included in the laser radar adjustment apparatus and is provided within a detection target region that is to be detected by the light receiving section, to emit light;
a second emitting step of causing a second light emitting unit, which is included in the laser radar adjustment apparatus and is provided outside the detection target region, to emit light; and
an adjusting step of adjusting the light receiving section so that the light emitted by the first light emitting unit is detected and the light emitted by the second light emitting unit is not detected.

8. The method according to claim 7, further comprising:
a first emission stopping step of causing the first light emitting unit to stop emitting light after executing the first emitting step,
wherein the second emitting step is executed after executing the first emission stopping step.

9. The method according to claim 7, further comprising:
a second emission stopping step of causing the second light emitting unit to stop emitting light after executing the second emitting step,
wherein the first emitting step is executed after executing the second emission stopping step.

10. The method according to claim 7,
wherein a cycle on which the first light emitting unit caused to emit light is based is different from a cycle on which the second light emitting unit caused to emit light is based.

11. The method according to any one of claims 7 through 10,
wherein a shape of the detection target region is circular,
wherein a number of the first light emitting unit and a number of the second light emitting unit is two or more, and
wherein the first and second light emitting units are arranged in a radial manner from a center of the detection target region.

12. The method according to any one of claims 7 through 10,
wherein a shape of the detection target region is rectangular,
wherein a number of the first light emitting unit and a number of the second light emitting unit is two or more, and
wherein the first and second light emitting units are arranged in a direction that is vertical to a direction of a line defining the shape of the detection target region at a position where the first and second light emitting units cross the line.

13. The method according to any one of claims 7 through 12,
wherein each of the first and second light emitting units includes a first device that emits visible light and a second device that emits ultraviolet light or infrared light, and
wherein the first device is configured to emit visible light when the second device emits ultraviolet light or infrared light.
